# EUROPEAN PATENT SPECIFICATION

(11) **EP 4 053 711 B1**
(45) Date of publication and mention of the grant of the patent: **25.11.2026**
(21) Application number: 20881893.0
(22) Date of filing: 03.03.2020
(51) Int. Cl.: H04L 9/00, G06F 16/23, G06Q 20/02, G06Q 30/06, G06Q 40/04

(54) **CONSENSUS METHOD FOR BLOCKCHAIN, AND CONSENSUS NODE, ELECTRONIC DEVICE AND STORAGE MEDIUM**
KONSENSVERFAHREN FÜR BLOCKCHAIN UND KONSENSKNOTEN, ELEKTRONISCHE VORRICHTUNG UND SPEICHERMEDIUM
PROCÉDÉ DE CONSENSUS POUR CHAÎNE DE BLOCS, ET NOEUD DE CONSENSUS, DISPOSITIF ÉLECTRONIQUE ET SUPPORT DE STOCKAGE

(30) Priority: 30.10.2019 CN 201911041448
(43) Date of publication of application: 07.09.2022
(73) Proprietor: Jingdong Technology Information Technology Co., Ltd., Beijing 100176 (CN)
(72) Inventor: ZHANG, Shuang, Beijing 100176 (CN)
(74) Representative: Barker Brettell LLP
(86) International application number: PCT/CN2020/077538
(87) International publication number: WO 2021/082315

(56) References cited:
- WO-A1-2019/028442
- CN-A- 107 493 162
- CN-A- 107 566 124
- CN-A- 109 409 122
- CN-A- 109 995 536
- CN-A- 110 009 759
- CN-A- 110 084 601
- CN-A- 110 825 755
- ANDREAS M ANTONOPOULOS: "Mastering Bitcoin", 21 July 2017 (2017-07-21), XP055570487, ISBN: 978-1-4919-5438-6, Retrieved from the Internet <URL:https://www.oreilly.com/library/view/mastering-bitcoin-2nd/9781491954379/> [retrieved on 20190318]

## Description

### TECHNICAL FIELD

The present application relates to the technical field of blockchain, and more particularly, to a consensus method for a blockchain, a consensus node, an electronic device, and a storage medium.

### BACKGROUND

Blockchain is an underlying open source technology, which involves computer technologies including a collection of new application modes such as distributed data storage, peer-to-peer transmission, consensus mechanism, an encryption algorithm, and has the characteristics of decentralization, rule application de-trust, security protection de-monopoly, etc., and a consensus is one of the important technologies in the blockchain.

In the existing art, a blockchain consensus includes practical byzantine fault tolerance (PBFT), etc., and a transaction request is mainly broadcasted by a proposing node, and each of consensus nodes (including the proposing node) executes a transaction task carried in the transaction request, and packages a result of executing the transaction task into a new block for a processing of adding to a blockchain.

However, in a process of realizing the present application, the inventor found that there is at least the following problem: distributed ledgers after a block is added to a chain are inconsistent.

Andreas M Antonopoulos discloses in "Mastering Bitcoin" that, in a bitcoin network, miners compete to solve a difficult mathematical problem based on a cryptographic hash algorithm. The solution to the probem, called the Proof-of-Work, is included in the new block and acts as proof that the miner expended significant computing effort. The competition to solve the Proof-of-Work algorithm to earn the reward and the right to record transactions on the block -chain is the basis for bitcoins security mode. In addition, CN 07 566 124 A discloses a consensus for electing the node that can generate the new block based on a shortest hash.

### SUMMARY

The present invention is set out in the appended set of claims. A purpose of the present application is to provide a consensus method for a blockchain, a consensus node, an electronic device and a storage medium, which are used to solve the problem of inconsistency of distributed ledgers in the existing art.

In a first aspect, the present application discloses a consensus method for a blockchain, and the method includes:
receiving a transaction request sent by an object, where the transaction request carries at least one transaction task;
calculating a first hash value of executing the at least one transaction task by a consensus node;
determining a second hash value according to the first hash value and the at least one transaction task;
receiving third hash values broadcasted by other consensus nodes, where each of the third hash values is determined by each of the other consensus nodes according to a result of executing the at least one transaction task by the each of the other consensus nodes and the at least one transaction task;
in response to the second hash value being the same as at least half of the third hash values, generating a block containing the first hash value and adding the block to the blockchain.

According to the first aspect, the third hash values broadcasted by the other consensus nodes are received, so that the second hash value is compared with each third hash value to determine whether the second hash value and each third hash value are the same. If half or more than half of the third hash values are the same as the second hash value, the block containing the first hash value is generated, and the generated block is added to the blockchain. Since the block containing the first hash value is generated and added to the blockchain when the second hash value is the same as half or more than half of the third hash values, consistency of distributed ledgers can be realized.

In an implementation, after receiving the third hash values broadcasted by the other consensus nodes, the method further includes:
generating and feeding back feedback information of consensus failure to the object in response to less than half of the third hash values being the same as the second hash value.

In an implementation, after receiving the third hash values broadcasted by the other consensus nodes, the method further includes:
rolling back the at least one transaction task in response to less than half of the third hash values being the same as the second hash value.

In an implementation, after receiving the third hash values broadcasted by the other consensus nodes, the method further includes:
acquiring a total number of the third hash values, and acquiring a same number of third hash values that are the same as the second hash value;
judging whether the total number is less than or equal to twice of the same number;
if yes, performing the generating the block containing the first hash value and adding the block to the blockchain.

In a second aspect, the present application discloses a consensus node, and the consensus node includes:
a first receiving module, configured to receive a transaction request sent by an object, where the transaction request carries at least one transaction task;
a calculating module, configured to calculate a first hash value of executing the at least one transaction task by the consensus node;
a determining module, configured to determine a second hash value according to the first hash value and the at least one transaction task;
a second receiving module, configured to receive third hash values broadcasted by other consensus nodes, where each of the third hash values is determined by each of the other consensus nodes according to a result of executing the at least one transaction task by the each of the other consensus nodes and the at least one transaction task;
a first generating module, configured to generate a block containing the first hash value in response to the second hash value being the same as at least half of the third hash values; and
an adding module, configured to add a block containing the first hash value to a blockchain.

In an implementation, the consensus node further includes:
a second generating module, configured to generate feedback information of consensus failure in response to less than half of the third hash values being the same as the second hash value; and
a feedback module, configured to feed back the feedback information to the object.

In an implementation, the consensus node further includes:
a rollback module, configured to roll back the at least one transaction task in response to less than half of the third hash values being the same as the second hash value.

In an implementation, the consensus node further includes:
an acquiring module, configured to acquire a total number of the third hash values, and acquiring a same number of third hash values that are the same as the second hash value;
a judging module, configured to judge whether the total number is less than or equal to twice of the same number; and
the first generating module being configured to execute the generation of the block containing the first hash value if the total number is less than or equal to twice of the same number.

In a third aspect, the present application discloses an electronic device, including a processor and a memory; where,
the memory is configured to store program code;
the processor is configured to call the program code stored in the memory to execute the method described in any one of the above implementations.

In a fourth aspect, the present application discloses a computer-readable storage medium having an instruction stored therein, and when the instruction is run on a computer, the computer is caused to execute the method as described in any one of the above implementations.

In a fifth aspect, the present application discloses a computer program including program code, and when a computer runs the computer program, the program code executes the method as described in any one of the above implementations.

In conjunction with the above technical solutions, the present application discloses a consensus method for a blockchain, a consensus node, an electronic device and a storage medium, including: receiving a transaction request sent by an object, where the transaction request carries at least one transaction task, calculating a first hash value of executing the at least one transaction task by a consensus node, determining a second hash value according to the first hash value and the at least one transaction task, receiving third hash values broadcasted by other consensus nodes, where each of the third hash values is determined by each of the other consensus nodes according to a result of executing the at least one transaction task by the each of the other consensus nodes and the transaction task, and generating and adding to the blockchain a block containing the first hash value in response to the second hash value being the same as at least half of the third hash values. A "pre-calculation" step (i.e., the step of calculating and obtaining the second hash value) is added in a consensus process, and a block of the first hash value is generated when the second hash value is the same as at least half of the third hash value,, which avoids the problem in the existing art that due to the reasons such as different consensus nodes selecting different parameters, the results of executing a transaction task are caused to be different, and when a block is directly generated according to a result of executing a transaction task and added to the blockchain, inconsistency of distributed ledgers occurs, thereby achieving a technical effect that the distributed ledgers are consistent.

### BRIEF DESCRIPTION OF THE DRAWINGS

FIG. 1 is a schematic diagram of an application scenario of a consensus method for a blockchain according to an example of the present application;
FIG. 2 is a flow schematic diagram of a consensus method for a blockchain according to an example of the present application;
FIG. 3 is a schematic diagram of an interaction of a consensus method for a blockchain according to an example of the present application;
FIG. 4 is a flow schematic diagram of a consensus method for a blockchain according to another example of the present application;
FIG. 5 is a flow schematic diagram of a consensus method for a blockchain according to another example of the present application;
FIG. 6 is a schematic diagram of a consensus node according to an example of the present application;
FIG. 7 is a schematic diagram of a consensus node according to another example of the present application;
FIG. 8 is a schematic diagram of a consensus node according to another example of the present application;
FIG. 9 is a schematic diagram of a consensus node according to another example of the present application;
FIG. 10 is a structural schematic diagram of an electronic device according to an example of the present application;

Reference numerals: 10 server; 20 user; 30 terminal device; 1 first receiving module; 2 calculating module; 3 determining module; 4 second receiving module; 5 first generating module; 6 adding module; 7 second generating module; 8 feedback module; 9 rollback module; 10 acquiring module; 11 judging module.

### DESCRIPTION OF EMBODIMENTS

Illustrative examples will be described in detail herein, examples of which are shown in the accompanying drawings. When the following description refers to the drawings, same numbers in different drawings indicate same or similar element unless otherwise indicated. Implementations described in the following illustrative examples do not represent all the implementations consistent with the present application. Instead, they are only examples of apparatuses and methods consistent with some aspects of the present application as detailed in the appended claims.

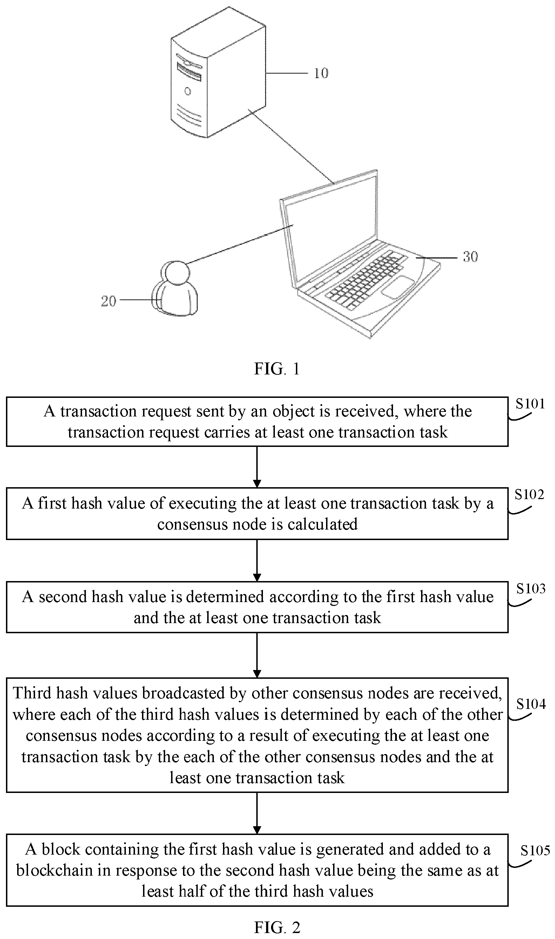

A consensus method for a blockchain provided by an embodiment of the present application can be applied to an application scenario as shown in FIG. 1.

In the application scenario shown in FIG. 1, the consensus method for a blockchain in the example of the present application is applied to a server 10, and a user 20 may initiate a transaction request through a terminal device 30 (the terminal device is a computer in FIG. 1).

Of course, in some examples, the user 20 may also trigger a client node in a blockchain to the server 10 through a user terminal such as a mobile phone or an iPad, so that a transaction request can be initiated by the client node.

Of course, in some other examples, the consensus method for a blockchain in the example of the present application may also be applied to a computer. When the consensus method for a blockchain according to the example of the present application is applied to a computer, the user may directly operate the computer to trigger a transaction request, or the user may trigger a client node in a blockchain to a computer through a user terminal such as a mobile phone or an iPad, so that a transaction request can be initiated by the client node.

The technical solution of the present application and how the technical solution of the present application solves the above technical problem will be described in detail below with reference to specific examples. The following specific examples may be combined with each other, and the same or similar concepts or processes may not be repeated in some examples. The examples of the present application will be described below in conjunction with the accompanying drawings.

In an aspect, an example of the present application provides a consensus method for a blockchain suitable for the above application scenario.

Please refer to FIG. 2, which is a flow schematic diagram of a consensus method for a blockchain according to an example of the present application.

As shown in FIG. 2, the method includes:
S101: a transaction request sent by an object is received, where the transaction request carries at least one transaction task.

The transaction request may carry one or more transaction tasks.

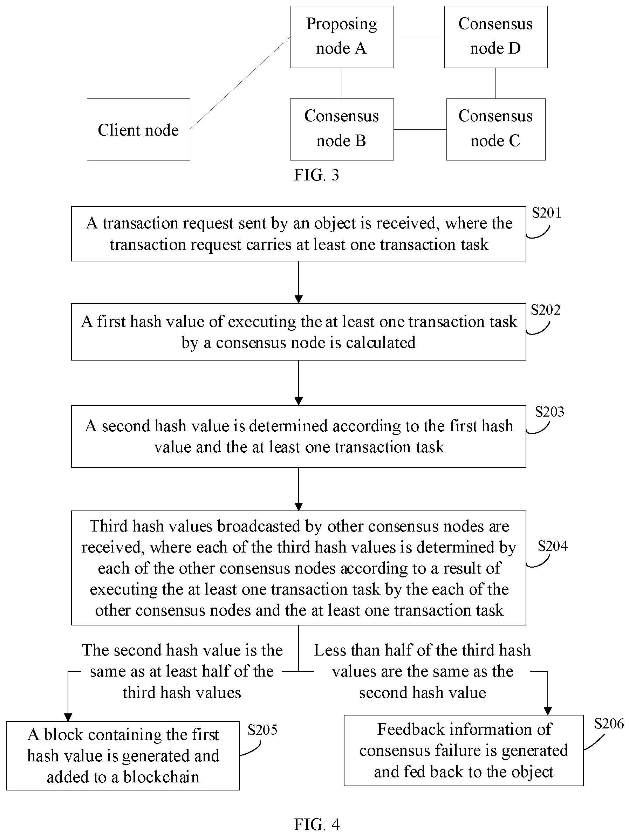

FIG. 3 is a schematic diagram of an interaction of a consensus method for a blockchain according to an example of the present application.

As can be known in combination with FIG. 2 and FIG. 3, in some examples, a client node initiates a transaction request to a consensus node, where the transaction request carries one or more transaction tasks. Furthermore, the client node specifically initiates a transaction request to a proposing node in the consensus nodes, so that the proposing node can broadcast the at least one transaction task, to enable other consensus nodes to learn about the at least one transaction.

The proposing node belongs to the consensus nodes, the proposing node is jointly elected by the consensus nodes, and any consensus node may become a proposing node.

That is, in this step, specifically, the proposing node receives a transaction request sent by the client node (such as a client terminal) and broadcasts at least one transaction task carried in the transaction request.

In some examples, when multiple transaction tasks are included in the transaction request, the multiple transaction tasks form a transaction sequence.

S102: a first hash value of executing the at least one transaction task by a consensus node is calculated.

S103: a second hash value is determined according to the first hash value and the at least one transaction task.

As can be known in combination with FIG. 3, in some examples, there are four consensus nodes, i.e., proposing node A, consensus node B, consensus node C and consensus node D.

In the existing art, the proposing node broadcasts a transaction request, and four consensus nodes (i.e., four consensus nodes including the proposing node) execute the transaction task in the transaction request respectively, and package an execution result into a block and add the block to the blockchain.

However, in the example of the present application, the step of "pre-calculation" is added, i.e., the four consensus nodes calculate the first hash value of executing the at least one transaction task, respectively, and calculate the second hash value according to the first hash value and the at least one transaction task, where the algorithm for calculating according to a certain known hash value and the transaction task to obtain another hash value can refer to the existing art, and will not be repeated herein.

According to the solution of the existing art, four consensus nodes execute the transaction task in the transaction request respectively, and directly package results of executing the transaction task and add to the blockchain, which may lead to inconsistency of distributed ledgers caused by different results of executing transaction tasks due to reasons such as different parameters selected by different consensus nodes.

In addition, in the example of the present application, the second hash value is calculated through the above-mentioned "pre-calculation" step, and when the second hash value meets a requirement (which will be described in detail later), a block containing the first hash value is generated, so as to avoid the above-mentioned problem of inconsistency of hash values in the existing art, thereby achieving a technical effect that distributed ledgers are consistent.

S104: third hash values broadcasted by other consensus nodes are received, where each of the third hash values is determined by each of the other consensus nodes according to a result of executing the at least one transaction task by the each of the other consensus nodes and the at least one transaction task.

In the example of the present application, each of the four consensus nodes will generate a hash value according to a result of executing the at least one transaction task and the at least one transaction task, and in order to distinguish the hash values generated by different nodes, the hash values are marked as the second hash value and the third hash value.

Here, explanation is made below by taking an example where a consensus node corresponding to the second hash value is the proposing node A, and consensus nodes corresponding to the third hash value are the consensus node B, the consensus node C and the consensus node D.

The proposing node A receives a transaction request sent by the client node and broadcasts the transaction request.

The proposing node A generates a second hash value, and the consensus node B, the consensus node C and the consensus node D generate third hash values respectively (see the above examples for the specific generating method, which will not be repeated herein).

The proposing node A broadcasts the second hash value.

The consensus node B, the consensus node C and the consensus node D broadcast the third hash values, respectively.

The proposing node A receives the third hash values broadcasted respectively by the consensus node B, the consensus node C and the consensus node D.

S105: a block containing the first hash value is generated and added to a blockchain in response to the second hash value being the same as at least half of the third hash values.

Based on the above examples, if the second hash value of the proposing node A is the same as two pieces of third hash values broadcasted by other two consensus nodes (which may be the consensus node B and the consensus node C, or may be the consensus node B and the consensus node D, or may be the consensus node C and the consensus node D), then the proposing node A generates a block containing the first hash value, and adds the block to the blockchain.

Similarly, a consensus node corresponding to the second hash value is the consensus node B, and consensus nodes corresponding to the third hash value are the proposing node A, the consensus node C and the consensus node D. Then:
The proposing node A receives a transaction request sent by the client node and broadcasts the transaction request.
The consensus node B generates a second hash value, and the proposing node A, the consensus node C and the consensus node D generate third hash values respectively (see the above examples for the specific generating method, which will not be repeated herein).

The consensus node B broadcasts the second hash value.

The proposing node A, consensus node C and consensus node D broadcast the third hash values respectively.

The consensus node B receives the third hash values broadcasted respectively by the proposing node A, the consensus node C and the consensus node D.

If the second hash value of the consensus node B is the same as two pieces of third hash values broadcasted by other two consensus nodes (which may be the proposing node A and the consensus node C, or may be the proposing node A and the consensus node D, or may be the consensus node C and the consensus node D), then the consensus node A generates a block containing the first hash value and adds the block to the blockchain.

In the example of the present application, by receiving third hash values broadcasted by other consensus nodes, the second hash value is compared with each third hash value to determine whether the second hash value and each third hash value are the same. If half or more than half of the third hash values are the same as the second hash value, a block containing the first hash value is generated, and the generated block is added to the blockchain. Since the block containing the first hash value is generated and added to the blockchain when the second hash value is the same as half or more than half of the third hash values, consistency of distributed ledgers can be realized.

Please refer to FIG. 4, which is a flow schematic diagram of a consensus method for a blockchain according to another example of the present application.

As shown in FIG. 4, the method includes:
S201: a transaction request sent by an object is received, where the transaction request carries at least one transaction task.

For the description of S201, please refer to S101, which will not be repeated herein.

S202: a first hash value of executing the at least one transaction task by a consensus node is calculated.

For the description of S202, please refer to S102, which will not be repeated herein.

S203: a second hash value is determined according to the first hash value and the at least one transaction task.

For the description of S203, please refer to S103, which will not be repeated herein.

S204: third hash values broadcasted by other consensus nodes are received, where each of the third hash values is determined by each of the other consensus nodes according to a result of executing the at least one transaction task by the each of the other consensus nodes and the at least one transaction task.

For the description of S204, please refer to S104, which will not be repeated herein.

S205: a block containing the first hash value is generated and added to a blockchain in response to the second hash value being the same as at least half of the third hash values.

For the description of S205, please refer to S105, which will not be repeated herein.

S206: feedback information of consensus failure is generated and fed back to the object in response to less than half of the third hash values being the same as the second hash value.

As can be known based on the above examples, in some examples, if the second hash value of the proposing node A is the same as two pieces of third hash values broadcasted by other two consensus nodes (which may be the consensus node B and the consensus node C, or may be the consensus node B and the consensus node D, or may be the consensus node C and the consensus node D), then the consensus node A generates a block containing the first hash value and adds the block to the blockchain.

However, it is possible that the second hash value of the proposing node A is different from two pieces of third hash values broadcasted by other two consensus nodes (which may be the consensus node B and the consensus node C, or may be the consensus node B and the consensus node D, or may be the consensus node C and the consensus node D), or that the second hash value of the proposing node A is different from the three third hash values broadcasted by the other three consensus nodes (the consensus node B, the consensus node C and the consensus node D), and then the proposing node A generates feedback information of consensus failure and sends the feedback information to the object, i.e., the proposing node A feeds back the feedback information to the client node (such as a client terminal).

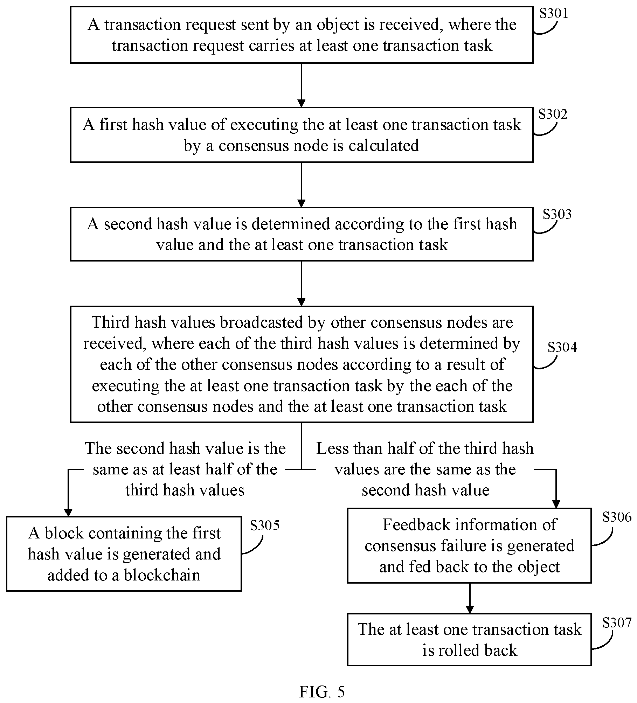

Please refer to FIG. 5, which is a flow schematic diagram of a consensus method for a blockchain according to another example of the present application.

As shown in FIG. 5, the method includes:
S301: a transaction request sent by an object is received, where the transaction request carries at least one transaction task.

For the description of S301, please refer to S101, which will not be repeated herein.

S302: a first hash value of executing the at least one transaction task by a consensus node is calculated.

For the description of S302, please refer to S102, which will not be repeated herein.

S303: a second hash value is determined according to the first hash value and the at least one transaction task.

For the description of S303, please refer to S103, which will not be repeated herein.

S304: third hash values broadcasted by other consensus nodes are received, where each of the third hash values is determined by each of the other consensus nodes according to a result of executing the at least one transaction task by the each of the other consensus nodes and the at least one transaction task.

For the description of S304, please refer to S104, which will not be repeated herein.

S305: a block containing the first hash value is generated and added to a blockchain in response to the second hash value being the same as at least half of the third hash values.

For the description of S305, please refer to S105, which will not be repeated herein.

S306: feedback information of consensus failure is generated and fed back to the object in response to less than half of the third hash values being the same as the second hash value.

For the description of S306, please refer to S206, which will not be repeated herein.

S307: the at least one transaction task is rolled back in response to less than half of the third hash values being the same as the second hash value.

Based on the above examples, if the second hash value of the proposing node A is different from two pieces of third hash values broadcasted by other two consensus nodes (which may be the consensus node B and the consensus node C, or may be the consensus node B and the consensus node D, or may be the consensus node C and the consensus node D), or that the second hash value of the proposing node A is different from the three third hash values broadcasted by other three consensus nodes (the consensus node B, the consensus node C and the consensus node D), and then the proposing node A performs a rollback to execute a transaction task in a next transaction request, and performs clearing processing for the second hash value.

In some examples, after S304, the method includes:
S3041: a total number of the third hash values is acquired, and a same number of third hash values that are the same as the second hash value is acquired;
S3042: whether the total number is less than or equal to twice of the same number is judged, if yes, a block containing the first hash value is generated and added to the blockchain.

For example, the same number T1 of the third hash values that are the same as the second hash value is counted, and the total number T2 of the third hash values is counted, and whether 2*T1 is greater than or equal to T2 is determined; if yes, the block containing the first hash value is generated and added to the blockchain.

Based on the above examples, in some examples, if 2*T1 is less than T2, feedback information of consensus failure is generated and sent to the client node.

Based on the above examples, in some examples, if 2*T1 is less than T2, a rollback is performed so that the consensus nodes can participate in a next round of consensus.

According to another aspect of examples of the present application, an example of the present application provides a consensus node.

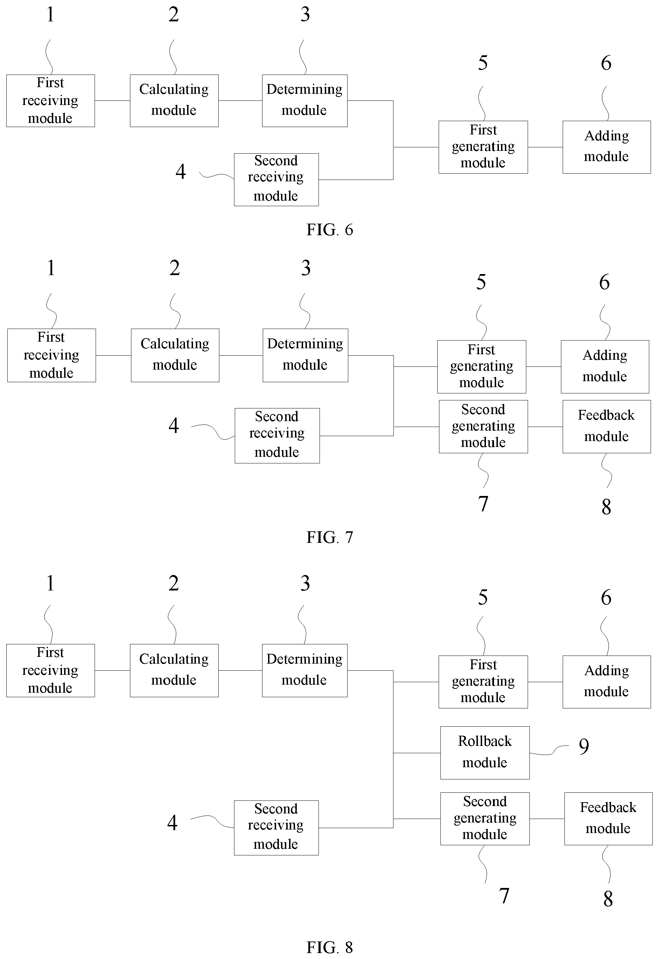

Please refer to FIG. 6, which is a schematic diagram of a consensus node according to an example of the present application.

As shown in FIG. 6, the node includes:
a first receiving module 1, configured to receive a transaction request sent by an object, where the transaction request carries at least one transaction task;
a calculating module 2, configured to calculate a first hash value of executing the at least one transaction task by the consensus node;
a determining module 3, configured to determine a second hash value according to the first hash value and the at least one transaction task;
a second receiving module 4, configured to receive third hash values broadcasted by other consensus nodes, where each of the third hash values is determined by each of the other consensus nodes according to a result of executing the at least one transaction task by each of the consensus nodes and the at least one transaction task;
a first generating module 5, configured to generate a block containing the first hash value in response to the second hash value being the same as at least half of the third hash values; and
an adding module 6, configured to add the block containing the first hash value to a blockchain.

As can be known in combination with FIG. 7, in some examples, the consensus node further includes:
a second generating module 7, configured to generate feedback information of consensus failure in response to less than half of the third hash values being the same as the second hash value; and
a feedback module 8, configured to feed back the feedback information to the object.

As can be known in combination with FIG. 8, in some examples, the consensus node further includes:
a rollback module 9, configured to roll back the at least one transaction task in response to less than half of the third hash values being the same as the second hash value.

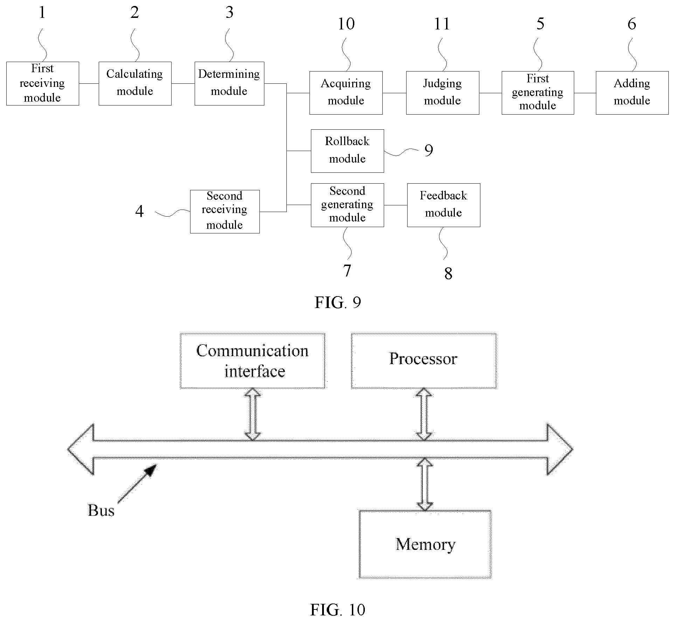

As can be known in combination with FIG. 9, in some examples, the consensus node further includes:
an acquiring module 10, configured to acquire a total number of the third hash values, and acquiring a same number of third hash values that are the same as the second hash value; and
a judging module 11, configured to judge whether the total number is less than or equal to twice of the same number; and
the first generating module 5 being configured to execute the generation of the block containing the first hash value if the total number is less than or equal to twice of the same number.

According to another aspect of examples of the present application, an example of the present application further provides an electronic device, including: a memory and a processor;
the memory being a memory configured to store processor executable instructions;
where the processor, when executing the instructions in the memory, is configured to implement the method as described in any one of the above examples.

Please refer to FIG. 10, which is a structural schematic diagram of an electronic device according to an example of the present application.

As shown in FIG. 10, the electronic device includes a memory and a processor, and the electronic device may further include a communication interface and a bus, where the processor, the communication interface and the memory are connected through the bus; the processor is configured to execute an executable module, such as a computer program, stored in the memory.

The memory may include a high-speed random access memory (RAM), and may further include a non-volatile memory, such as at least one magnetic disk memory. A communication connection between a system network element and at least one other network element is realized through at least one communication interface (which may be wired or wireless), and the Internet, a wide area network, a local network, a metropolitan area network, etc. may be used.

The bus may be an ISA bus, a PCI bus, or an EISA bus, etc. The bus may be divided into an address bus, a data bus, a control bus, etc.

The memory is configured to store a program, and the processor executes the program after receiving an execution instruction. The method disclosed in any one of the foregoing examples of the present application may be applied to the processor or implemented by the processor.

The processor may be an integrated circuit chip with signal processing capability. In an implementation process, various steps of the foregoing methods may be done by an integrated logic circuit of hardware in the processor or an instruction in a form of software. The above-mentioned processor may be a general-purpose processor, including a central processing unit (CPU), a network processor (NP), etc.; may also be a digital signal processor (DSP), an application specific integrated circuit (ASIC), a field-programmable gate array (FPGA) or other programmable logic devices, discrete gates or transistor logic devices, and discrete hardware components. The steps of the methods disclosed in the examples of the present application may be directly embodied as being implemented by a hardware decoding processor, or being implemented by a combination of hardware and software modules in the decoding processor. The software module may be located in a conventional storage medium in the existing art, such as a random access memory, a flash memory, a read only memory, a programmable read only memory or an electrically erasable programmable memory, a register, etc. The storage medium is located in the memory, and the processor reads information in the memory and performs the steps of the foregoing methods in combination with its hardware.

According to another aspect of examples of the present application, an example of the present application further provides a computer-readable storage medium having a computer-executable instruction stored therein, and the computer, when executing the computer-executable instruction, is configured to implement the method as described in any one of the above examples.

Readers should understand that in the description of this specification, the descriptions referring to the terms "one embodiment", "some examples", "examples", "specific examples" or "some examples" are intended to indicate that specific features, structures or characteristics described in combination with these examples or examples are included in at least one embodiment or example of the present application. In the description, the illustrative expressions of the above terms do not necessarily refer to the same examples or examples. Furthermore, the described specific features, structures or characteristics may be combined in any one or more examples or examples in a suitable manner. In addition, those skilled in the art can combine and assemble different examples or examples described in this description and the features of different examples or examples when there is no conflict.

A person skilled in the art can clearly understand that for the convenience and brevity of the description, specific working processes of the apparatus and units described above can refer to the corresponding processes in the foregoing method examples, which will not repeated herein.

In the several examples provided by the present application, it should be understood that the disclosed apparatus and method may be implemented in other manners. For example, the apparatus examples described above are only illustrative. For example, the division of the units is only a logical function division, and there may be other divisions in actual implementation, for example, multiple units or components may be combined or integrated into another system, or some features may be ignored or not implemented.

The units described as separate components may or may not be physically separated, and the components displayed as units may or may not be physical units, that is, may be located in one location, or may be distributed to multiple network units. Some or all of the units may be selected according to actual needs to achieve the purpose of the solutions of the examples of the present application.

Furthermore, various functional units in the examples of the present application may be integrated into one processing unit, or each unit may be separate physically, or two or more units may be integrated into one unit. The above-mentioned integrated units may be implemented in the form of hardware or in the form of a software functional unit.

If the integrated units are implemented in the form of a software functional unit and sold or used as an independent product, they may be stored in a computer readable storage medium. Based on this understanding, the technical solution of the present application essentially, or a part that contributes to the existing art, or all or part of the technical solution may be embodied in the form of a software product, and the computer software product is stored in a storage medium and includes several instructions to cause a computer equipment (which may be a personal computer, a server, or a network equipment, etc.) to execute all or part of the steps of the method described in each example of the present application. The aforementioned storage medium includes: a USB flash drive, a mobile hard disk, a read-only memory (ROM), a random access memory (RAM), a magnetic disk or an optical disk, and other media that can store program code.

It should also be understood that in each example of the present application, the sequence numbers of the above-mentioned processes do not mean the order of execution, and the order of execution of each process should be determined by its function and internal logic, and should not constitute any limitation on the implementation process of the examples of the present application.

The above are only specific implementations of the present application, but the protection scope of the present application is not limited herein. Any technical personnel familiar with this technical field may easily think of various equivalent modifications or substitutions within the technical scope disclosed in the present application, and these modifications or substitutions should be covered within the protection scope of the present application. Therefore, the protection scope of the present application shall be subject to the protection scope of the claims.

## Claims

1. A consensus method for a blockchain, being applied to a consensus node, wherein the method comprises:
receiving (S101, S201, S301) a transaction request sent by a client node, wherein the transaction request carries at least one transaction task;
calculating (S102, S202, S302) a first hash value of executing the at least one transaction task;
determining (S103, S203, S303) a second hash value according to the first hash value and the at least one transaction task;
receiving (S104, S204, S304) third hash values broadcasted by other consensus nodes, wherein each of the third hash values is determined by each of the other consensus nodes according to a result of executing the at least one transaction task by the each of the other consensus nodes and the at least one transaction task;
generating (S105, S205, S305) and adding to the blockchain a block containing the first hash value in response to the second hash value being the same as at least half of the third hash values.

2. The method according to claim 1, wherein after receiving (S104, S204, S304) the third hash values broadcasted by the other consensus nodes, the method further comprises:
generating (S206, S306) and feeding back feedback information of consensus failure to the object in response to less than half of the third hash values being the same as the second hash value.

3. The method according to claim 1 or 2, wherein after the receiving (S104, S204, S304) the third hash values broadcasted by the other consensus nodes, the method further comprises:
rolling back (S307) the at least one transaction task in response to less than half of the third hash values being the same as the second hash value.

4. The method according to any one of claims 1 to 3, wherein after the receiving (S104, S204, S304) the third hash values broadcasted by the other consensus nodes, the method further comprises:
acquiring a total number of the third hash values, and acquiring a same number of third hash values that are the same as the second hash value;
judging whether the total number is less than or equal to twice of the same number;
if the total number is less than or equal to twice of the same number, performing the generating and adding to the blockchain the block containing the first hash value.

5. A consensus node, wherein the consensus node comprises:
a first receiving module (1), configured to receive a transaction request sent by a client node, wherein the transaction request carries at least one transaction task;
a calculating module (2), configured to calculate a first hash value of executing the at least one transaction task by the consensus node;
a determining module (3), configured to determine a second hash value according to the first hash value and the at least one transaction task;
a second receiving module (4), configured to receive third hash values broadcasted by other consensus nodes, wherein each of the third hash values is determined by each of the other consensus nodes according to a result of executing the at least one transaction task by the each of the other consensus nodes and the at least one transaction task;
a first generating module (5), configured to generate a block containing the first hash value in response to the second hash value being the same as at least half of the third hash values; and
an adding module (6), configured to add the block containing the first hash value to a blockchain.

6. The consensus node according to claim 5, wherein the consensus node further comprises:
a second generating module (7), configured to generate feedback information of consensus failure in response to less than half of the third hash values being the same as the second hash value; and
a feedback module (8), configured to feed back the feedback information to the object.

7. The consensus node according to claim 5 or 6, wherein the consensus node further comprises:
a rollback module (9), configured to roll back the at least one transaction task in response to less than half of the third hash values being the same as the second hash value.

8. The consensus node according to any one of claims 5 to 7, wherein the consensus node further comprises:
an acquiring module (10), configured to acquire a total number of the third hash values, and acquire a same number of third hash values that are the same as the second hash value; and
a judging module (11), configured to judge whether the total number is less than or equal to twice of the same number; and
the first generating module (5) being configured to execute the generating the block containing the first hash value if the total number is less than or equal to twice of the same number.

9. An electronic device, comprising a processor and a memory; wherein
the memory is configured to store program code;
the processor is configured to call the program code stored in the memory to execute the method according to any one of claims 1 to 4.

10. A computer-readable storage medium having an instruction stored therein, wherein when the instruction is run on a computer, the computer is caused to execute the method according to any one of claims 1 to 4.

11. A computer program comprising program code, wherein when a computer runs the computer program, the program code executes the method according to any one of claims 1 to 4.

## Patentansprüche

1. Konsensverfahren für eine Blockchain, das auf einen Konsensknoten angewendet wird, wobei das Verfahren umfasst:
Empfangen (S101, S201, S301) einer Transaktionsanforderung, die durch einen Client-Knoten gesendet wird,
wobei die Transaktionsanforderung mindestens eine Transaktionsaufgabe enthält;
Berechnen (S102, S202, S302) eines ersten Hashwerts zum Ausführen der mindestens einen Transaktionsaufgabe;
Bestimmen (S103, S203, S303) eines zweiten Hashwerts gemäß dem ersten Hashwert und der mindestens einen Transaktionsaufgabe;
Empfangen (S104, S204, S304) dritter Hashwerte, die von anderen Konsensknoten ausgesendet werden, wobei jeder der dritten Hashwerte von jedem der anderen Konsensknoten gemäß einem Ergebnis des Ausführens der mindestens einen Transaktionsaufgabe durch jeden der anderen Konsensknoten und der mindestens einen Transaktionsaufgabe bestimmt wird;
Erzeugen (S105, S205, S305) und Hinzufügen eines Blocks zur Blockchain, der den ersten Hashwert enthält, als Reaktion darauf, dass der zweite Hashwert zumindest der Hälfte der dritten Hashwerte gleich ist.

2. Verfahren nach Anspruch 1, wobei das Verfahren nach dem Empfangen (S104, S204, S304) der dritten Hashwerte, die von den anderen Konsensknoten ausgesendet werden, ferner umfasst:
Erzeugen (S206, S306) und Rückgeben von Rückmeldungsinformationen eines Konsensfehlers an das Objekt als Reaktion darauf, dass weniger als die Hälfte der dritten Hashwerte gleich dem zweiten Hashwert ist.

3. Verfahren nach Anspruch 1 oder 2, wobei das Verfahren nach dem Empfangen (S104, S204, S304) der dritten Hashwerte, die von den anderen Konsensknoten ausgesendet werden, ferner umfasst:
Zurücksetzen (S307) der mindestens einen Transaktionsaufgabe als Reaktion darauf, dass weniger als die Hälfte der dritten Hashwerte gleich dem zweiten Hashwert ist.

4. Verfahren nach einem der Ansprüche 1 bis 3, wobei das Verfahren nach dem Empfangen (S104, S204, S304) der dritten Hashwerte, die von den anderen Konsensknoten ausgesendet werden, ferner umfasst:
Erfassen einer Gesamtanzahl der dritten Hashwerte und Erfassen einer gleichen Anzahl an dritten Hashwerten, die gleich dem zweiten Hashwert sind;
Beurteilen, ob die Gesamtanzahl kleiner gleich dem Zweifachen der gleichen Anzahl ist;
wenn die Gesamtanzahl kleiner gleich dem Doppelten der gleichen Anzahl ist, Durchführen des Erzeugens und Hinzufügens des Blocks, der den ersten Hashwert enthält, zu der Blockchain.

5. Konsensknoten, wobei der Konsensknoten umfasst:
ein erstes Empfangsmodul (1), das dazu konfiguriert ist, eine Transaktionsanforderung zu empfangen, die durch einen Client-Knoten gesendet wird,
wobei die Transaktionsanforderung mindestens eine Transaktionsaufgabe enthält;
ein Berechnungsmodul (2), das dazu konfiguriert ist, einen ersten Hashwert zum Ausführen der mindestens einen Transaktionsaufgabe durch den Konsensknoten zu berechnen;
ein Bestimmungsmodul (3), das dazu konfiguriert ist, einen zweiten Hashwert gemäß dem ersten Hashwert und der mindestens einen Transaktionsaufgabe zu bestimmen;
ein zweites Empfangsmodul (4), das dazu konfiguriert ist, dritte Hashwerte zu empfangen, die von anderen Konsensknoten ausgesendet werden, wobei jeder der dritten Hashwerte von jedem der anderen Konsensknoten gemäß einem Ergebnis des Ausführens der mindestens einen Transaktionsaufgabe durch jeden der anderen Konsensknoten und der mindestens einen Transaktionsaufgabe bestimmt wird;
ein erstes Erzeugungsmodul (5), das dazu konfiguriert ist, einen Block, der den ersten Hashwert enthält, als Reaktion darauf zu erzeugen, dass der zweite Hashwert zumindest der Hälfte der dritten Hashwerte gleich ist; und
ein Hinzufügemodul (6), das dazu konfiguriert ist, den Block, der den ersten Hashwert enthält, zu einer Blockchain hinzuzufügen.

6. Konsensknoten nach Anspruch 5, wobei der Konsensknoten ferner umfasst:
ein zweites Erzeugungsmodul (7), das dazu konfiguriert ist, Rückmeldungsinformationen eines Konsensausfalls als Reaktion darauf zu erzeugen, dass weniger als die Hälfte der dritten Hashwerte gleich dem zweiten Hashwert ist; und
ein Rückmeldungsmodul (8), das dazu konfiguriert ist, die Rückmeldungsinformationen an das Objekt zurückzugeben.

7. Konsensknoten nach Anspruch 5 oder 6, wobei der Konsensknoten ferner umfasst:
ein Zurücksetzungsmodul (9), das dazu konfiguriert ist, die mindestens eine Transaktionsaufgabe als Reaktion darauf zurückzusetzen, dass weniger als die Hälfte der dritten Hashwerte gleich dem zweiten Hashwert ist.

8. Konsensknoten nach einem der Ansprüche 5 bis 7, wobei der Konsensknoten ferner umfasst:
ein Erfassungsmodul (10), das dazu konfiguriert ist, eine Gesamtanzahl der dritten Hashwerte zu erfassen und eine gleiche Anzahl von dritten Hashwerten zu erfassen, die gleich dem zweiten Hashwert sind; und
ein Beurteilungsmodul (11), das dazu konfiguriert ist, zu beurteilen, ob die Gesamtanzahl kleiner gleich dem Zweifachen der gleichen Anzahl ist; und
wobei das erste Erzeugungsmodul (5) dazu konfiguriert ist, das Erzeugen des Blocks, der den ersten Hashwert enthält, auszuführen, wenn die Gesamtanzahl kleiner gleich dem Zweifachen der gleichen Anzahl ist.

9. Elektronische Vorrichtung, umfassend einen Prozessor und einen Speicher; wobei
der Speicher dazu konfiguriert ist, Programmcode zu speichern;
der Prozessor dazu konfiguriert ist, den in dem Speicher gespeicherten Programmcode aufzurufen, um das Verfahren nach einem der Ansprüche 1 bis 4 auszuführen.

10. Computerlesbares Speichermedium, das eine darauf gespeicherte Anweisung aufweist, wobei, wenn die Anweisung auf einem Computer ausgeführt wird, der Computer dazu veranlasst wird, das Verfahren nach einem der Ansprüche 1 bis 4 auszuführen.

11. Computerprogramm, umfassend Programmcode, wobei, wenn ein Computer das Computerprogramm ausführt, der Programmcode das Verfahren nach einem der Ansprüche 1 bis 4 ausführt.

## Revendications

1. Procédé de consensus pour une chaîne de blocs, étant appliqué à un nœud de consensus, dans lequel le procédé comprend :
la réception (S101, S201, S301) d'une demande de transaction envoyée par un nœud client,
dans lequel la demande de transaction achemine au moins une tâche de transaction ;
le calcul (S102, S202, S302) d'une première valeur de hachage de l'exécution de l'au moins une tâche de transaction ;
la détermination (S103, S203, S303) d'une deuxième valeur de hachage selon la première valeur de hachage et l'au moins une tâche de transaction ;
la réception (S104, S204, S304) de troisièmes valeurs de hachage diffusées par d'autres nœuds de consensus, dans lequel chacune des troisièmes valeurs de hachage est déterminée par chacun des autres nœuds de consensus selon un résultat de l'exécution de l'au moins une tâche de transaction par ledit chacun des autres nœuds de consensus et de l'au moins une tâche de transaction ;
la génération (S105, S205, S305) d'un bloc contenant la première valeur de hachage et l'ajout de celui-ci à la chaîne de blocs en réponse au fait que la deuxième valeur de hachage est identique à au moins la moitié des troisièmes valeurs de hachage.

2. Procédé selon la revendication 1, dans lequel, après la réception (S104, S204, S304) des troisièmes valeurs de hachage diffusées par les autres nœuds de consensus, le procédé comprend en outre :
la génération (S206, S306) d'informations de retour d'échec de consensus et le retour de celles-ci à l'objet en réponse au fait que moins de la moitié des troisièmes valeurs de hachage sont identiques à la deuxième valeur de hachage.

3. Procédé selon la revendication 1 ou la revendication 2, dans lequel, après la réception (S104, S204, S304) des troisièmes valeurs de hachage diffusées par les autres nœuds de consensus, le procédé comprend en outre :
l'annulation (S307) de l'au moins une tâche de transaction en réponse au fait que moins de la moitié des troisièmes valeurs de hachage sont identiques à la deuxième valeur de hachage.

4. Procédé selon l'une quelconque des revendications 1 à 3, dans lequel, après la réception (S104, S204, S304) des troisièmes valeurs de hachage diffusées par les autres nœuds de consensus, le procédé comprend en outre :
l'acquisition d'un nombre total des troisièmes valeurs de hachage, et l'acquisition d'un même nombre de troisièmes valeurs de hachage qui sont identiques à la deuxième valeur de hachage ;
le jugement du fait que le nombre total est inférieur ou égal au double du même nombre ;
si le nombre total est inférieur ou égal au double du même nombre, la réalisation de la génération du bloc contenant la première valeur de hachage et de l'ajout de celui-ci à la chaîne de blocs.

5. Nœud de consensus, dans lequel le nœud de consensus comprend :
un premier module de réception (1), configuré pour la réception d'une demande de transaction envoyée par un nœud client,
dans lequel la demande de transaction achemine au moins une tâche de transaction ;
un module de calcul (2), configuré pour le calcul d'une première valeur de hachage de l'exécution de l'au moins une tâche de transaction par le nœud de consensus ;
un module de détermination (3), configuré pour la détermination d'une deuxième valeur de hachage selon la première valeur de hachage et l'au moins une tâche de transaction ;
un second module de réception (4), configuré pour la réception de troisièmes valeurs de hachage diffusées par d'autres nœuds de consensus, dans lequel chacune des troisièmes valeurs de hachage est déterminée par chacun des autres nœuds de consensus selon un résultat de l'exécution de l'au moins une tâche de transaction par ledit chacun des autres nœuds de consensus et de l'au moins une tâche de transaction ;
un premier module de génération (5), configuré pour la génération d'un bloc contenant la première valeur de hachage en réponse au fait que la deuxième valeur de hachage est identique à au moins la moitié des troisièmes valeurs de hachage ; et
un module d'ajout (6), configuré pour l'ajout du bloc contenant la première valeur de hachage à une chaîne de blocs.

6. Nœud de consensus selon la revendication 5, dans lequel le nœud de consensus comprend en outre :
un second module de génération (7), configuré pour la génération d'informations de retour d'échec de consensus en réponse au fait que moins de la moitié des troisièmes valeurs de hachage sont identiques à la deuxième valeur de hachage ; et
un module de retour (8), configuré pour le retour des informations de retour à l'objet.

7. Nœud de consensus selon la revendication 5 ou la revendication 6, dans lequel le nœud de consensus comprend en outre :
un module d'annulation (9), configuré pour l'annulation de l'au moins une tâche de transaction en réponse au fait que moins de la moitié des troisièmes valeurs de hachage sont identiques à la deuxième valeur de hachage.

8. Nœud de consensus selon l'une quelconque des revendications 5 à 7, dans lequel le nœud de consensus comprend en outre :
un module d'acquisition (10), configuré pour l'acquisition d'un nombre total des troisièmes valeurs de hachage, et l'acquisition d'un même nombre de troisièmes valeurs de hachage qui sont identiques à la deuxième valeur de hachage ; et
un module de jugement (11), configuré pour le jugement du fait que le nombre total est inférieur ou égal au double du même nombre ; et
le premier module de génération (5) étant configuré pour l'exécution de la génération du bloc contenant la première valeur de hachage si le nombre total est inférieur ou égal au double du même nombre.

9. Dispositif électronique, comprenant un processeur et une mémoire ; dans lequel
la mémoire est configurée pour le stockage d'un code de programme ;
le processeur est configuré pour l'appel du code de programme stocké dans la mémoire pour l'exécution du procédé selon l'une quelconque des revendications 1 à 4.

10. Support de stockage lisible par ordinateur ayant une instruction stockée dans celui-ci, dans lequel, lorsque l'instruction est exécutée sur un ordinateur, l'ordinateur est amené à exécuter le procédé selon l'une quelconque des revendications 1 à 4.

11. Programme informatique comprenant un code de programme, dans lequel, lorsqu'un ordinateur exécute le programme informatique, le code de programme exécute le procédé selon l'une quelconque des revendications 1 à 4.
